# EUROPÄISCHE PATENTSCHRIFT

(11) **EP 0 382 079 B1**
(45) Veröffentlichungstag und Bekanntmachung des Hinweises auf die Patenterteilung: **25.08.1993**
(21) Anmeldenummer: 90101958.8
(22) Anmeldetag: 01.02.1990
(51) Int. Cl.: B23B 31/02

(54) **Verfahren und Vorrichtung zum Spannen von Werkzeugen**
Method of and device for chucking tools
Procédé et dispositif de serrage des outils

(30) Priorität: 04.02.1989 DE 3903308; 03.08.1989 DE 3925641
(43) Veröffentlichungstag der Anmeldung: 16.08.1990
(73) Patentinhaber: Fortuna-Werke Maschinenfabrik GmbH, D-70376 Stuttgart (DE)
(72) Erfinder: Jesinger, Richard, D-7300 Esslingen (DE); Hothmer, Andreas, D-6100 Darmstadt (DE)
(74) Vertreter: Witte, Alexander, Dr.-Ing.

(56) Entgegenhaltungen:
- DE-A- 3 011 221
- DE-A- 3 149 156
- DE-A- 3 721 521
- US-A- 3 759 536

## Beschreibung

Die Erfindung betrifft ein Verfahren zum Spannen und Entspannen von Werkzeugen mit einem Schaftdurchmesser der Größenordnung zwischen 5 und 10 mm in einer Aufnahme einer für hohe Drehzahlen ausgelegten Spindel.

Die Erfindung betrifft ferner eine Vorrichtung zum Spannen und Entspannen von Werkzeugen mit einem Schaftdurchmesser in der Größenordnung zwischen 5 und 10 mm, mit einer einen Schaft des Werkzeuges umschließenden Aufnahme einer für hohe Drehzahlen ausgelegten Spindel.

Verfahren und Vorrichtungen der vorstehend genannten Art sind allgemein bekannt. So werden in Spindeln von Bohr-, Fräs- oder Schleifmaschinen üblicherweise Aufnahmen für die jeweiligen Werkzeuge verwendet, die nach Art eines Spannfutters oder einer Spannzange ausgebildet sind oder die Werkzeuge sind an ihrer Aufnahmeseite mit einem Normkegel versehen, der in eine entsprechende kegelförmige Aufnahme der Spindel hineingezogen und dort axial verspannt wird. In jedem Falle entsteht zwischen der Spindelaufnahme und dem Werkzeug ein Reibschluß, der eine Mitnahme des Werkzeuges bei rotierender Spindel garantiert.

Bei Werkzeugen, die mittels mechanischer Spannelemente, insbesondere mittels einer Spannzange oder eines Spannfutters gehalten sind, stellen sich dann Nachteile ein, wenn infolge hoher Drehzahlen im Betrieb des Werkzeuges Fliehkräfte auftreten, die der Haltekraft der Spannelemente entgegenwirken. Wenn diese Fliehkräfte zu groß sind und die Haltekräfte ganz oder teilweise übersteigen, so ist der erforderliche Reibschluß zwischen Spindelaufnahme und Werkzeug nicht mehr gewährleistet, mit der Folge, daß das Werkzeug die gewünschten Bearbeitungskräfte zur Spanabnahme nicht mehr aufzubringen vermag.

Aus dem Dokument DE-A-3 011 221 ist eine Muffenverbindung zwischen einer Gesteinsbohrstange und einem Adapter bekannt. Gesteinsbohrstangen sind Werkzeuge für Bohrhämmer, die zum Bohren von Spreng- und Ankerlöchern im Tunnelbau und Sprengvortrieb benutzt werden. Derartige Werkzeuge werden in der Praxis mit mehreren Metern Länge, teilweise bis zu 30 Meter Länge ausgeführt und sie haben bei üblichen Durchmessern zwischen 22 und 32 mm Gewichte von beispielsweise zwischen 2,7 und 6 kg pro Meter.

Bei der bekannten Muffenverbindung wird eine Verbindung zwischen einer Gesteinsbohrstange und einem Adapter hergestellt. Die Gesteinsbohrstange trägt an ihrem vorderen Ende ein Gewinde zur Aufnahme einer Bohrkrone. Das rückwärtige Ende der Gesteinsbohrstange ist außen zylindrisch ausgebildet. Der Adapter, der zum Einsetzen der Gesteinsbohrstange in eine Spannvorrichtung des Bohrhammers dient, ist an seinem vorderen Ende außen ebenfalls zylindrisch ausgebildet, jedoch mit einem kleineren Durchmesser. Diese beiden außenzylindrischen Enden von Gesteinsbohrstange bzw. Adapter werden nun von beiden Seiten in eine mit einer gestuften Innenbohrung versehene Muffe eingeführt, die zuvor auf ca. 400°C erwarmt und anschließend abgekühlt wurde. Die Durchmesser sind dabei so gewählt, daß die Muffe beim Abkühlen auf die außenzylindrischen Enden von Gesteinsbohrstange und Adapter aufgeschrumpft wird und so eine kraftschlüssige und verdrehfeste Verbindung entsteht, mit der Einzelschlagkräfte von 300 kN und ein Drehmoment von 4000 Nm übertragen werden können.

Der Erfindung liegt daher die Aufgabe zugrunde, ein Verfahren und eine Vorrichtung der eingangs genannten Art dahingehend weiterzubilden, daß auch bei hohen Fliehkräften an der Spannvorrichtung das Werkzeug sicher gespannt bleibt und das erforderliche Drehmoment von der Spindel auf das Werkzeug übertragen werden kann.

Gemäß dem eingangs genannten Verfahren wird diese Aufgabe erfindungsgemäß durch die folgenden Schritte gelöst:
a) mindestens abschnittsweises Erwärmen des die Aufnahme umgebenden Abschnittes der Spindel;
b) Einführen des Werkzeuges in die durch die Erwärmung vergrößerte Aufnahme;
c) Abkühlen des Abschnittes derart, daß das Werkzeug in der durch die Abkühlung geschrumpften Aufnahme der Spindel reibschlüssig gehalten wird; und
d) erneutes Erwärmen des Abschnittes zum anschließenden Entspannen des Werkzeuges.

Gemäß der eingangs genannten Vorrichtung wird die der Erfindung zugrundeliegende Aufgabe dadurch gelöst, daß die Aufnahme als hülsenförmiger Abschnitt ausgebildet ist und daß an dem Abschnitt eine Heizeinrichtung für den Abschnitt angeordnet ist.

Die der Erfindung zugrundeliegende Aufgabe wird auf diese Weise vollkommen gelöst, weil es durch die an sich bekannte Maßnahme des Aufschrumpfens in überraschend einfacher Weise möglich wird, Werkzeuge in dem genannten Durchmesserbereich in Sekundenschnellen ein - und auszuspannen und mit so großem Reibschluß zu halten, daß das Werkzeug sich auch bei großen Fliehkräften nicht in der Aufnahme lockert. Es ergibt sich dabei der Vorteil, daß die ohnehin vorzusehenden Mittel zum Erwärmen des die Aufnahme umgebenden Abschnittes zugleich benutzt werden können, um das Werkzeug wieder aus der Aufnahme auszuspannen. Auch der Rundlauf und die Steifigkeit der Werkzeuge sind bei eingeschrumpftem Werkzeug größer als bei einer herkömmlichen Einspannung mittels Spannzange oder Spannfutter.

Bei einem weiteren, besonders bevorzugten Ausführungsbeispiel des erfindungsgemäßen Verfahrens besteht der Abschnitt aus einem elektrisch leitfähigen Werkstoff und wird mittels Induktionsheizens erwärmt.

Diese Maßnahme hat den Vorteil, daß die Erwärmung sich von außen nach innen ausbreitet, so daß zunächst der hülsenförmige Abschnitt erwärmt wird, ehe die Wärme auf den eingespannten Schaft des Werkzeuges gelangt. Auf diese Weise wird sichergestellt, daß sich zunächst der Aufnahmeabschnitt dehnt, so daß das Werkzeug bei Entspannen zuverlässig aus der Aufnahme gelöst werden kann.

In entsprechender Weise ist bei Ausführungsformen der erfindungsgemäßen Vorrichtung vorgesehen, daß der Abschnitt aus einem elektrisch leitenden Werkstoff besteht und daß die Heizeinrichtung eine um den Abschnitt herum angeordnete Induktionsspule umfaßt.

Bei einer weiteren bevorzugten Ausbildung der erfindungsgemäßen Vorrichtung ist der Abschnitt einstückig mit einer Welle der Spindel.

Diese Maßnahme hat den Vorteil, daß eine konstruktiv äußerst einfache Konstruktion entsteht, bei der der Abschnitt lediglich als vorderer hülsenartiger Abschnitt der Welle ausgebildet werden muß.

Bei Varianten der erfindungsgemäßen Vorrichtung kann die Aufnahme entweder im wesentlichen zylindrisch oder konisch ausgebildet sein, je nachdem, wie dies im Einzelfall zweckmäßig ist.

Besonders bevorzugt ist eine Variante der erfindungsgemäßen Vorrichtung, bei der die Aufnahme nur bereichsweise mit einer Preßpassung für das Werkzeug ausgebildet ist.

Diese Maßnahme hat den Vorteil, daß die reibschlüssige Halterung des Werkzeuges durch den aufgeschrumpften Abschnitt nur in definierten Bereichen des Werkzeuges dargestellt wird, so daß ein optimaler Kompromiß unter dem Gesichtspunkt des leichten Einführens, Zentrierens und Einspannens des Werkzeuges gefunden werden kann.

Dies gilt insbesondere dann, wenn die Preßpassung an der Mündung der Aufnahme vorgesehen ist und vorzugsweise im Abstand von der Preßpassung ein weiterer Bereich der Aufnahme als Übergangspassung ausgebildet ist.

Diese Maßnahmen haben den Vorteil, daß zum einen der Abschnitt lediglich im vorderen Bereich, also an einer leicht zugängigen Stelle erwärmt werden muß, während sich die bereichsweise Anordnung der Preßpassung und im Abstand davon der Übergangspassung vorteilhaft auf die Zentrierung des Werkzeuges auswirkt.

Bei einer weiteren bevorzugten Ausgestaltung eines Ausführungsbeispiels mit mündungsseitig angeordneter Preßpassung ist vorgesehen, daß die Aufnahme im Anschluß an die Preßpassung aufgeweitet und am rückwärtigen Ende konisch ausgebildet ist.

Diese Maßnahme hat den Vorteil, daß der Bohrer beim Einsetzen in die erwärmte Aufnahme zentriert wird, indem er im vorderen Bereich durch die mündungsseitige, durch die Erwärmung erweiterte Preßpassung grob zentriert und am rückwärtigen Ende der Aufnahme durch deren konischen Bereich exakt zur Achse zentriert wird. Läßt man die Aufnahme sich nun wieder abkühlen, so zieht sie sich nicht nur in radialer sondern auch in axialer Richtung zusammen und drückt damit den Bohrer in das rückwärtige konische Ende der Aufnahme hinein, wo er exakt zentriert bleibt.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematisierte Ansicht eines Ausführungsbeispiels einer erfindungsgemäßen Vorrichtung, auch zur Erläuterung eines Ausführungsbeispiels des erfindungsgemäßen Verfahrens;
- Fig. 2: in vergrößertem Maßstab ein Detail aus Fig. 1, jedoch für eine Weiterbildung der erfindungsgemäßen Vorrichtung;
- Fig. 3: eine Darstellung, ähnlich Fig. 2, jedoch für ein weiteres Ausführungsbeispiel der Erfindung;
- Fig. 4: eine weitere Darstellung, ähnlich Fig. 2, jedoch für noch ein weiteres Ausführungsbeispiel der Erfindung.

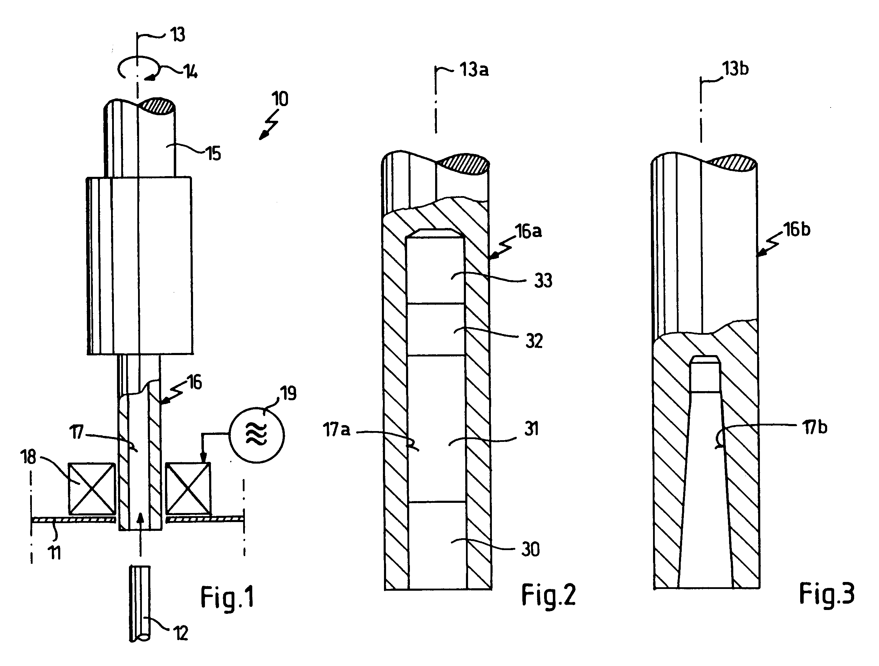

In Fig. 1 bezeichnet 10 insgesamt eine Spindel, beispielsweise ein Bohr-, Fräs- oder Schleifspindel von an sich bekannter Bauart.

Die Spindel 10 ist für Werkzeuge mit einem Schaftdurchmesser in der Größenordnung zwischen 5 und 10 mm ausgelegt und arbeitet bei hohen Drehzahlen. Unter "hohen Drehzahlen" sollen im Sinne der eingangs erläuterten Umstände Drehzahlen verstanden werden, bei denen Fliehkräfte auftreten, die bei herkömmlichen Spannzangen oder Spannfuttern die Gefahr eines Verlustes des Reibschlusses mit dem eingespannten Werkzeug mit sich bringen.

Die Spindel 10 ist in einem Gehäuse 11 untergebracht, von dem in Fig. 1 nur ein Ausschnitt aus der Frontplatte zu erkennen ist, an der die Spindel 10 von außen zugängig ist. In die Spindel 10 kann ein Werkzeug 12 eingespannt werden, wie dies noch erläutert werden wird.

Die Spindel 10 ist um eine Achse 13 drehbar, vorzugsweise mit sehr hohen Drehzahlen, wie mit einem Pfeil 14 angedeutet.

Die Spindel 10 weist eine Welle 15 auf, deren vorderer Abschnitt 16 hülsenartig mit einer Aufnahme 17 für einen Schaft des Werkzeuges 12 versehen ist. Um den vorderen Abschnitt 16 herum ist eine Induktionsspule 18 angeordnet, die von einem Wechselstromgenerator 19 gespeist werden kann.

Die Wirkungsweise der Anordnung gemäß Fig. 1 ist wie folgt:
Die Aufnahme 17 des vorderen Abschnittes 16 ist so dimensioniert, daß ihr Innendurchmesser bei Raumtemperatur geringfügig kleiner als der Außendurchmesser des Schaftes des Werkzeuges 12 ist.

Es wird nun der Wechselstromgenerator 19 eingeschaltet, der beispielsweise einen Wechselstrom mit einer Frequenz zwischen 50 Hz und 50 kHz, vorzugsweise 20 kHz liefert. Die Induktionsspule 18 erzeugt demzufolge ein Wechselmagnetfeld entsprechender Frequenz, das seinerseits Wirbelströme im vorderen Abschnitt 16 zur Folge hat. Infolge dieser Wirbelströme erwärmt sich der Abschnitt 16, wobei die Wärmewirkung von außen nach innen zeitlich fortschreitet, da sich die Wirbelströme infolge ihrer hohen Frequenz an der äußeren Oberfläche des Abschnittes 16 ausbilden.

Infolge der Erwärmung des Abschnittes 16 dehnt sich dieser radial, mit der Folge, daß die Aufnahme 17 einen größeren Innendurchmesser erhält, so daß das Werkzeug 12 nun mit seinem Schaft in die vergrößerte Aufnahme 17 eingeführt werden kann.

Sobald das Werkzeug 12 mit seinem Schaft in die Aufnahme 17 eingeführt ist, wird der Wechselstromgenerator 19 abgeschaltet und der Abschnitt 16 kühlt wieder auf Raumtemperatur ab. Infolge der Abkühlung schrumpft der Abschnitt 16 und die Aufnahme 17 legt sich unter hoher Reibung an den Schaft des Werkzeuges 12 an. Sobald der Abschnitt 16 genügend abgekühlt ist, kann das erforderliche Drehmoment von der Welle 15 auf das Werkzeug 12 übertragen werden.

Fig. 2 zeigt in vergrößertem Maßstab eine etwas variierte Aufnahme 17a des Abschnittes 16a. Man erkennt, daß die Aufnahme 17a in vier axial hintereinanderliegende Abschnitte 30, 31, 32, 33 unterteilt ist.

Die Durchmesser der Abschnitte 30 bis 33 sind so gewählt, daß der erste Abschnitt 30 bei Raumtemperatur die gewünschte Preßpassung für das Werkzeug 12 darstellt, während der zweite Abschnitt 31 und der vierte Abschnitt 33 einen deutlich größeren Durchmesser aufweisen und der dritte Abschnitt 32 eine Übergangspassung für den Schaft des Werkzeuges 12 darstellt.

Auf diese Weise wird erreicht, daß das Werkzeug bei durch Wärme gedehntem Abschnitt 16 leicht eingeführt und mittels der Abschnitte 30 und 32 zentriert wird. Die Erwärmung ist dabei im wesentlichen nur im Bereich des ersten Abschnittes 30, also vorne an der Aufnahme 17a erforderlich.

Weiterhin zeigt Fig. 3 noch eine weitere Variante eines Abschnittes 16b mit einer konischen Aufnahme 17b, die ebenfalls durch Erwärmung bzw. Abkühlung zum reibschlüssigen Halten des Werkzeuges 12 dienen kann, sofern dieses einen komplementär konischen Schaft aufweist.

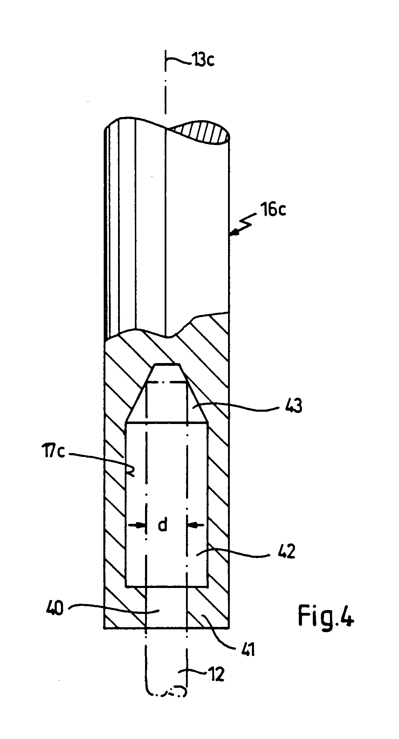

Schließlich zeigt Fig. 4 noch eine weitere Variante eines Abschnittes 16c, bei dem eine Aufnahme 17c wiederum mit einem ersten Abschnitt 40 einer Preßpassung im Bereich einer Stirnseite 41 des vorderen Abschnittes 16c versehen ist.

Von der Stirnseite 41 aus gesehen weitet sich der erste Abschnitt 40 dann jedoch nach kurzer axialer Strecke in einen zweiten, geweiteten Abschnitt 42 auf, dessen Durchmesser wesentlich größer als der Durchmesser d des Werkzeuges 12 ist.

Schließlich ist die Aufnahme 17c am rückwärtigen Ende mit einem dritten Abschnitt 43 von konischer Gestalt versehen.

Wenn der vordere Abschnitt 16c in der bereits beschriebenen Weise erwärmt wird, so erweitert sich der erste Abschnitt 40 in ausreichendem Maße, um das Werkzeug 12 einführen zu können. Das Werkzeug 12 wird vom Benutzer der Bohrspindel von Hand lose bis gegen das rückwärtige Ende der Aufnahme 17c im konischen dritten Abschnitt 43 eingeschoben. In diesem Zustand läßt man den vorderen Abschnitt 16c sich wieder abkühlen. Hierbei geschieht zweierlei:
Zum einen verengt sich der erste Abschnitt 40 in radialer Richtung, so daß das Werkzeug 12 in der bereits mehrfach beschriebenen Weise reibschlüssig gehalten wird. Gleichzeitig verkürzt sich aber der vordere Abschnitt 16c auch in axialer Richtung, so daß das Werkzeug 12 nunmehr unter Einwirkung einer Druckkraft gegen den dritten, konischen Abschnitt 43 der Aufnahme 17c gepreßt wird. Auf diese Weise bleibt die Zentrierung des Werkzeuges 12 auch bei hoher mechanischer Belastung erhalten.

Obwohl bei den vorstehend erläuterten Ausführungsbeispielen der Erfindung eine induktive Heizung vorgesehen wurde, versteht sich, daß auch andere Arten der Aufheizung eingesetzt werden können, je nachdem, wie dies im Einzelfall zweckmäßig ist.

Es hat sich in praktischen Versuchen herausgestellt, daß die Welle 15 mit dem vorderen Abschnitt 16 aus einem üblichen Stahl hergestellt werden kann und daß z.B. bei einem Außendurchmesser des Abschnittes 16 in der Größenordnung zwischen 5 und 10 mm lediglich eine Aufheiz- bzw. Abkühlzeit in der Größenordnung von einer Sekunde benötigt wird, wenn mit induktiver Heizung gearbeitet wird.

Es hat sich ferner gezeigt, daß auch das Entspannen des Werkzeuges 12 unproblematisch ist, weil durch erneutes Aufheizen des vorderen Abschnittes 16 die Aufnahme 17 wieder geweitet wird, so daß das Werkzeug 12 in einfacher Weise entnommen werden kann. Bei Verwendung einer Induktionsheizung gelangt die Wärme von der äußeren Oberfläche nach innen, so daß zunächst die durch den Abschnitt 16 gebildete Hülse erwärmt wird, ehe das Werkzeug 12 mit seinem Schaft ebenfalls erwärmt wird und sich weitet. Es hat sich jedoch gezeigt, daß bereits der Übergang zwischen Werkzeug 12 und Abschnitt 16 ausreicht, um einen so großen Wärmeübergangswiderstand darzustellen, daß eine unzulässige Erwärmung und damit Aufweitung des Werkzeuges 12 nicht befürchtet werden muß.

Die vorstehend beschriebene Vorrichtung eignet sich sowohl zur Aufnahme von Werkzeugen 12 aus Hartmetall wie auch zur Aufnahme von Werkzeugen 12 aus anderen Materialien, beispielsweise aus einer Keramik. Durch geeignete Auswahl der Materialien für den Abschnitt 16 und das Werkzeug 12 kann gewährleistet werden, daß eine möglichst geringe Heizleistung bzw. eine möglichst kurze Aufheizzeit benötigt wird, um das Werkzeug 12 ein- oder auszuspannen.

## Patentansprüche

1. Verfahren zum Spannen und Entspannen von Werkzeugen (12) mit einem Schaftdurchmesser in der Größenordnung zwischen 5 und 10 mm in einer Aufnahme (17) einer für hohe Drehzahlen ausgelegten Spindel (10), gekennzeichnet durch die Schritte:
a) mindestens abschnittsweises Erwärmen des die Aufnahme (17) umgebenen Abschnittes (16) der Spindel (10);
b) Einführen des Werkzeugs (12) in die durch die Erwärmung vergrößerte Aufnahme (17);
c) Abkühlen des Abschnittes (16) derart, daß das Werkzeug (12) in der durch die Abkühlung geschrumpften Aufnahme (17) der Spindel (10) reibschlüssig gehalten wird; und
d) erneutes Erwärmen des Abschnittes (16) zum anschliessenden Entspannen des Werkzeuges (12).

2. Verfahren nach Anspruch 1, dadurch gekennzeichnet, daß der Abschnitt (16) aus einem elektrischen leitfähigen Werkstoff besteht und mittels Induktionsheizen erwärmt wird.

3. Vorrichtung zum Spannen und Entspannen von Werkzeugen (12) mit einem Schaftdurchmesser in der Größenordnung zwischen 5 und 10 mm, mit einer einen Schaft des Werkzeuges (12) umschließenden Aufnahme (17) einer für hohe Drehzahlen ausgelegten Spindel (10), dadurch gekennzeichnet, daß die Aufnahme (17) als hülsenförmiger Abschnitt (16) ausgebildet ist, und daß an dem Abschnitt (16) eine Heizeinrichtung (18,19) für den Abschnitt (16) angeordnet ist.

4. Vorrichtung nach Anspruch 3, dadurch gekennzeichnet, daß der Abschnitt (16) aus einem elektrisch leitenden Werkstoff besteht und daß die Heizeinrichtung eine um den Abschnitt (16) herum angeordnete Induktionsspule (18) umfaßt.

5. Vorrichtung nach Anspruch 3 oder 4, dadurch gekennzeichnet, daß der Abschnitt (16) einstückig mit einer Welle (15) der Spindel (10) ist.

6. Vorrichtung nach einem oder mehreren der Ansprüche 3 bis 5, dadurch gekennzeichnet, daß die Aufnahme (17, 17a) im wesentlichen zylindrisch ist.

7. Vorrichtung nach einem oder mehreren der Ansprüche 3 bis 5, dadurch gekennzeichnet, daß die Aufnahme (17b) im wesentlichen konisch ist.

8. Vorrichtung nach einem oder mehreren der Ansprüche 3 bis 7, dadurch gekennzeichnet, daß die Aufnahme (17a) nur bereichsweise mit einer Preßpassung (30; 40) für das Werkzeug (12) ausgebildet ist.

9. Vorrichtung nach Anspruch 8, dadurch gekennzeichnet, daß die Preßpassung (30; 40) an der Mündung der Aufnahme (17a; 17c) vorgesehen ist.

10. Vorrichtung nach Anspruch 9, dadurch gekennzeichnet, daß im Abstand von der Preßpassung (30) ein weiterer Bereich (32) der Aufnahme (17a) als Übergangspassung ausgebildet ist.

11. Vorrichtung nach Anspruch 9, dadurch gekennzeichnet, daß die Aufnahme (17c) im Anschluß an die Preßpassung (40) aufgeweitet (42) und am rückwärtigen Ende konisch (43) ausgebildet ist.

## Claims

1. Process for clamping and unclamping tools (12) having a shank diameter in the order of magnitude of between 5 and 10 mm in a receiving fixture (17) of a spindle (10) designed for high rotation speeds, characterised by the steps:
a) at least sectional heating of that section (16) of the spindle (10) surrounding the receiving fixture (17);
b) introduction of the tool (12) into the receiving fixture (17) enlarged by the heating;
c) cooling of the section (16) in such a way that the tool (12) is held frictionally engaged in the receiving fixture (17), shrunk by the cooling, of the spindle (10); and
d) renewed heating of the section (16) for the subsequent unclamping of the tool (12).

2. Process according to Claim 1, characterised in that the section (16) consists of an electrically conductive material and is heated by means of induction heating.

3. Device for clamping and unclamping tools (12) having a shank diameter in the order of magnitude of between 5 and 10 mm, having a receiving fixture (17), enclosing a shank of the tool (12), of a spindle (10) designed for high rotation speeds, characterised in that the receiving fixture (17) is configured as a sleeve-shaped section (16) and that on the section (16) there is disposed a heating apparatus (18, 19) for the section (16).

4. Device according to Claim 3, characterised in that the section (16) consists of an electrically conducting material and in that the heating apparatus comprises an induction coil (18) disposed around the section (16).

5. Device according to Claim 3 or 4, characterised in that the section (16) is formed in one piece with a shaft (15) of the spindle (10).

6. Device according to one or more of Claims 3 to 5, characterised in that the receiving fixture (17, 17a) is essentially cylindrical.

7. Device according to one or more of Claims 3 to 5, characterised in that the receiving fixture (17b) is essentially conical.

8. Device according to one or more of Claims 3 to 7, characterised in that the receiving fixture (17a) is only regionally configured with a press fit (30; 40) for the tool (12).

9. Device according to Claim 8, characterised in that the press fit (30; 40) is provided at the mouth of the receiving fixture (17a; 17c).

10. Device according to Claim 9, characterised in that, at a distance from the press fit (30), a further region (32) of the receiving fixture (17a) is configured as a transition fit.

11. Device according to Claim 9, characterised in that the receiving fixture (17c) is widened (42) in the region adjoining the press fit (40) and is conically configured (43) at the rear end.

## Revendications

1. Procédé pour serrer et pour desserrer des outils (12), avec un diamètre de queue situé entre 5 et 10 mm, dans un logement (17) d'une broche (10) prévue pour des vitesses de rotation élevées, caractérisé par les étapes consistant à :
a) chauffer au moins partiellement la partie (16) de la broche (10) qui entoure le logement (17) ;
b) introduire l'outil (12) dans le logement (17) élargi par le chauffage ;
c) refroidir la partie (16) de telle manière que l'outil (12) soit maintenu en contact de friction dans le logement (17) de la broche (10) qui est contracté du fait du refroidissement ; et
d) chauffer de nouveau la partie (16) pour ensuite desserrer et retirer l'outil (12).

2. Procédé selon la revendication 1, caractérisé en ce que la partie (16) consiste en un matériau électroconducteur et en ce qu'elle est chauffée par chauffage par induction.

3. Dispositif pour serrer et desserrer des outils (12), avec un diamètre de queue situé entre 5 et 10 mm, avec un logement (17) d'une broche (10), prévue pour des vitesses de rotation élevées, ledit logement entourant une queue de l'outil (12), caractérisé en ce que le logement (17) est conçu en tant que partie (16) en forme de douille et en ce qu'un dispositif de chauffage (18, 19) est disposé contre la partie (16) pour le chauffage de la partie (16).

4. Dispositif selon la revendication 3, caractérisé en ce que la partie (16) consiste en un matériau électroconducteur et en ce que le dispositif de chauffage comprend une bobine d'induction (18) disposée autour de la partie (16).

5. Dispositif selon la revendication 3 ou 4, caractérisé en ce que la partie (16) est d'un seul tenant avec un arbre (15) de la broche (10).

6. Dispositif selon l'une ou plusieurs des revendications 3 à 5, caractérisé en ce que le logement (17, 17a) est sensiblement cylindrique.

7. Dispositif selon l'une ou plusieurs des revendications 3 à 5, caractérisé en ce que le logement (17b) est sensiblement conique.

8. Dispositif selon l'une ou plusieurs des revendications 3 à 7, caractérisé en ce que le logement (17a) n'est conçu que partiellement avec un ajustage serré (30 ; 40) pour l'outil (12).

9. Dispositif selon la revendication 8, caractérisé en ce que l'ajustage serré (30 ; 40) est prévu à l'embouchure du logement (17a ; 17c).

10. Dispositif selon la revendication 9, caractérisé en ce qu'une autre zone (32) du logement (17a), écartée de l'ajustage serré (30) est conçue en tant qu'ajustage de transition.

11. Dispositif selon la revendication 9, caractérisé en ce que le logement (17c) s'élargit (42) après l'ajustage serré (40) et en ce qu'il est conçu conique (43) à l'extrémité arrière.
